# EUROPÄISCHE PATENTANMELDUNG

(11) **EP 4 682 645 A1**
(43) Veröffentlichungstag der Anmeldung: **21.01.2026**
(21) Anmeldenummer: 24189091.2
(22) Anmeldetag: 17.07.2024
(51) Int. Cl.: G05B 9/02, G05B 19/042

(54) **VERFAHREN ZUM FREIGEBEN ODER ABLEHNEN EINES MASCHINENVORGANGS IN EINER INDUSTRIEANLAGE**

(71) Anmelder: Wiegon GmbH, 6500 Landeck (AT)
(72) Erfinder: WEISKOPF, Bernhard, 6500 Landeck (AT); ABLER, Simon, 6500 Landeck (AT)
(74) Vertreter: Torggler & Hofmann Patentanwälte - Innsbruck

(57) **Zusammenfassung**

Verfahren zum Freigeben oder Ablehnen eines durch einen Bediener mittels einer Freigabeanforderung (14) sicherheitsrelevanten Maschinenvorgangs in einer Industrieanlage, bevorzugt Abfallsammeleinrichtung (1), welche wenigstens eine, bevorzugt mehrere, fernstartbare Maschinen (2) aufweist, Industrieanlage, bevorzugt Abfallsammeleinrichtung (1), Fernbedienung (3), Computerprogramm und Datensignal.

## Beschreibung

Die Offenbarung betrifft ein Verfahren zum Freigeben oder Ablehnen wenigstens eines sicherheitsrelevanten Maschinenvorgangs in einer Industrieanlage, bevorzugt einer Abfallsammeleinrichtung, durch wenigstens einen Bediener, wobei die Industrieanlage wenigstens eine Maschine aufweist, durch welche der sicherheitsrelevante Maschinenvorgang durchführbar ist, eine Industrieanlage, bevorzugt Abfallsammeleinrichtung, eine Fernbedienung, ein Computerprogramm und ein Datensignal.

In einer Industrieanlage in Form einer bevorzugten Abfallsammeleinrichtung im Sinne der Offenbarung, welche beispielsweise Teil eines Recyclinghofs sein kann, werden Wertstoffe getrennt gesammelt, um sie einer Wiederverwertung zuzuführen. Die nachfolgenden Erläuterungen beziehen sich beispielhaft auf eine solche Abfallsammeleinrichtung.

Private und gewerbliche Nutzer geben ihre Wertstoffe zu verschiedenen Tageszeiten ab. Vor Ort ist bisher Betreuung durch geschultes Personal nötig, vor allem in sicherheitsrelevanten Bereichen, welche gefährliche Maschinen wie Pressvorrichtungen beinhalten. Der Betrieb ist daher an das Vorhandensein dieses Personals und an bestimmte Öffnungszeiten gebunden. Die Betreuung durch geschultes Personal ist zeit- und kostenintensiv. Es besteht daher der Wunsch, sicherheitsrelevante Stationen in der Abfallsammeleinrichtung, welche gefährliche Maschinen wie Pressvorrichtungen beinhalten, unabhängig von vor Ort befindlichem Betreuungspersonal zu betreiben oder auch über die Ferne die Betreuung mehrerer Abfallsammeleinrichtungen durch dasselbe Personal zu ermöglichen.

Dies würde aber bedeuten, dass ungeschulte Personen als Benutzer die Maschinen in der automatisierten Abfallsammeleinrichtung bedienen. Es ist daher sicherzustellen, dass beim Start eines Arbeitsvorgangs, z. B. eines Pressvorgangs, die Unfallverhütung auf gleichem Niveau durchführbar ist, als ob Betreuung vor Ort wäre. Der Sicherheitsbereich, in welchem sich die Maschine befindet, muss insbesondere frei von Personen sein, sodass der Betrieb gefahrlos möglich ist.

Die Freigabe eines sicherheitsrelevanten Maschinenvorgangs ist für spätere mögliche Prüfungen zu dokumentieren. Für Servicefälle soll trotzdem vor Ort auch ein temporärer Betrieb ohne Sicherheitsmaßnahmen durchführbar sein.

Durch eine Kamera kann an sich über Fernzugriff die Einhaltung der Sicherheit durch geschultes Personal, welches sich entfernt von der Abfallsammeleinrichtung befindet, gewährleistet werden.

Bei Verwendung einer Kamera ist zu gewährleisten, dass das richtige Kamerabild (die ausgewählte Maschine oder der Sichtbereich, in welchem eine Maschine angeordnet ist) betrachtet wird und das gezeigte Video- oder Standbild auch hinreichend aktuell (bevorzugt in Echtzeit) ist und nicht, z. B. aufgrund von Verbindungsproblemen oder Latenz, ein veraltetes Bild gezeigt wird, das nicht mehr hinreichend aktuell.

Bereits bekannte Lösungen für ferngewartete Pressvorrichtungen sehen wie folgt aus: Entweder wird die Maschine in einem maximalen Umkreis von z. B. fünf Metern mit einer Steuerkassette betrieben oder der Arbeitsgang wird mit Sicherheitseinrichtungen oder Sperren gesichert, die den Gefahrenbereich absperren. Das sind z. B. Klappen, die für Menschen zu klein sind. Erst das Schließen der Klappe öffnet für Pressgut den Weg zum Pressraum. Bei Sperrgut werden die Sperren jedoch entfernt. Befugte geschulte Personen sorgen vor Ort für Einhaltung von Sicherheitsvorkehrungen und Abläufen.

Infrarotkameras würden warme Körper darstellen. Infrarotbilder sind bezüglich Personen nicht aussagekräftig, vor allem im Sommer, wenn die Sonne auf die Metallflächen scheint. Außerdem sind sie nicht zuverlässig, wenn eine Person in einen Sicherheitsbereich gerät und sofort von Material (z. B. Karton) bedeckt werden würde. Die Verwendung einer Infrarotkamera als alleinige Sicherungsmaßnahme wird daher von Sicherheitstechnikern als nicht ausreichend bewertet.

Problem der fehlenden Dokumentation. Es ist im Nachhinein nicht nachvollziehbar, warum der Start einer Maschine freigegeben wurde.

Es sind manchmal Schlüsselschalter vorhanden (Einschalten nur mit Schlüssel möglich, damit nicht unbefugt eingeschaltet wird), aber Personal lässt oft fahrlässig Schlüssel stecken, damit sich die Benutzer selbst bedienen können.

Es ist eine Aufgabe ein Verfahren, eine Industrieanlage, bevorzugt eine Abfallsammeleinrichtung, eine Fernbedienung, ein Computerprogramm und ein Datensignal, welches ein solches Computerprogramm überträgt, bereitzustellen, welche die Sicherheit eines sicherheitsrelevanten Maschinenvorgangs in einer Industrieanlage, bevorzugt einer Abfallsammeleinrichtung, gewährleisten.

Diese Aufgabe wird gelöst durch ein Verfahren mit den Merkmalen des Anspruchs 1, eine Industrieanlage, bevorzugt Abfallsammeleinrichtung, mit den Merkmalen des Anspruchs 10, eine Fernbedienung mit den Merkmalen des Anspruchs 13, ein Computerprogramm mit den Merkmalen des Anspruchs 14 und ein Datensignal, welches ein solches Computerprogramm überträgt, welche die Sicherheit eines sicherheitsrelevanten Maschinenvorgangs in einer Industrieanlage, bevorzugt einer Abfallsammeleinrichtung, gewährleisten, auch wenn sich wenigstens ein Bediener in einer von der Industrieanlage entfernten Position befindet.

Ein Verfahren zum Freigeben oder Ablehnen wenigstens eines sicherheitsrelevanten Maschinenvorgangs in der Industrieanlage, bevorzugt der Abfallsammeleinrichtung, durch wenigstens einen sich in einer von der Industrieanlage entfernten Position befindenden Bediener, wobei die Industrieanlage wenigstens eine Maschine, bevorzugt mehrere Maschinen, aufweist, durch welche der wenigstens eine sicherheitsrelevante Maschinenvorgang ausführbar ist, weist wenigstens die folgenden Schritte auf:
- Erstellen einer Freigabeanforderung für einen sicherheitsrelevanten Maschinenvorgang in Bezug auf eine ausgewählte Maschine
- Übermitteln der Freigabeanforderung an wenigstens eine erste Empfangsvorrichtung durch ein Kommunikationsnetzwerk
- in Reaktion auf eine an die erste Empfangsvorrichtung übermittelte Freigabeanforderung Bereitstellen wenigstens eines Signals durch eine der ausgewählten Maschine zugeordnete Sicherheitsvorrichtung
- Übermitteln des wenigstens einen bereitgestellten Signals an den wenigstens einen Bediener mittels einer Sendevorrichtung durch ein Kommunikationsnetzwerk
- Eingeben wenigstens eines Quittierungssignals, welches mit dem wenigstens einen bereitgestellten Signal in einem vorbestimmten Zusammenhang steht, durch den wenigstens einen Bediener in der entfernten Position
- Übertragen des wenigstens einen eingegebenen Quittierungssignals an eine Empfangsvorrichtung, welche die wenigstens eine erste Empfangsvorrichtung oder wenigstens eine weitere Empfangsvorrichtung ist, durch ein Kommunikationsnetzwerk
- Überprüfen, ob das wenigstens eine eingegebene Quittierungssignal mit dem wenigstens einen bereitgestellten Signal im vorbestimmten Zusammenhang steht durch eine Auswertevorrichtung und
   - für den Fall, dass das wenigstens eine eingegebene Quittierungssignal mit dem wenigstens einen bereitgestellten Signal im vorbestimmten Zusammenhang steht, Freigeben der Freigabeanforderung durch die Auswertevorrichtung oder eine Freigabevorrichtung
   - für den Fall, dass das wenigstens eine eingegebene Quittierungssignal mit dem wenigstens einen bereitgestellten Signal nicht im vorbestimmten Zusammenhang steht oder nicht empfangen wird, Ablehnen der Freigabeanforderung durch die Auswertevorrichtung oder eine Freigabevorrichtung

Eine Industrieanlage, bevorzugt Abfallsammeleinrichtung weist wenigstens auf:
- eine Maschine, bevorzugt mehrere Maschinen, vorzugsweise Pressvorrichtung(en), durch welche ein sicherheitsrelevanter Maschinenvorgang ausführbar ist
- wenigstens eine erste Empfangsvorrichtung, die dazu konfiguriert ist, über ein Kommunikationsnetzwerk eine Freigabeanforderung zu empfangen
- eine Sicherheitsvorrichtung, die dazu konfiguriert ist, in Reaktion auf eine an die wenigstens erste Empfangsvorrichtung übermittelte Freigabeanforderung wenigstens ein Signal bereitzustellen
- eine Sendevorrichtung, die dazu konfiguriert ist, das wenigstens eine bereitgestellte Signal durch ein Kommunikationsnetzwerk an wenigstens einen sich entfernt von der Industrieanlage befindenden Bediener zu übermitteln
- eine Empfangsvorrichtung, die dazu konfiguriert ist, über ein Kommunikationsnetzwerk wenigstens ein Quittierungssignal des wenigstens einen Bedieners zu empfangen, wobei die Empfangsvorrichtung die wenigstens eine erste Empfangsvorrichtung oder wenigstens eine weitere Empfangsvorrichtung ist
- eine Auswertevorrichtung, die dazu konfiguriert ist zu überprüfen, ob das wenigstens eine empfangene Quittierungssignal mit dem wenigstens einen bereitgestellten Signal in einem vorbestimmten Zusammenhang steht
- eine Freigabevorrichtung, die dazu konfiguriert ist,
   - für den Fall, dass das wenigstens eine eingegebene Quittierungssignal mit dem wenigstens einen bereitgestellten Signal im vorbestimmten Zusammenhang steht, die Freigabeanforderung freizugeben
   - für den Fall, dass das wenigstens eine eingegebene Quittierungssignal mit dem wenigstens einen bereitgestellten Signal nicht im vorbestimmten Zusammenhang steht oder nicht empfangen wird, die Freigabeanforderung abzulehnen

Für die Eingabe des wenigstens einen Quittierungssignals durch den wenigstens einen Bediener kann beim Verfahren und/oder der Industrieanlage wenigstens eine Fernbedienung zum Einsatz kommen. Diese ist dazu konfiguriert, eine Eingabe wenigstens eines Quittierungssignals durch wenigstens einen Bediener zu akzeptieren und das wenigstens eine eingegebene Quittierungssignal an die erste oder wenigstens eine weitere Empfangsvorrichtung durch ein Kommunikationsnetzwerk zu übermitteln.

Ein Computerprogramm konfiguriert bei Ausführung auf einem mobilen Computer, insbesondere Laptop, Mobiltelefon oder Tablet, den mobilen Computer als eine solche Fernbedienung.

Ein Datensignal überträgt ein solches Computerprogramm.

Eine Freigabeanforderung im Sinne dieser Offenbarung signalisiert einen Wunsch, einen sicherheitsrelevanten Maschinenvorgang freizugeben.

Das Erstellen einer Freigabeanforderung für einen sicherheitsrelevanten Maschinenvorgang in Bezug auf eine ausgewählte Maschine kann beispielsweise automatisch durch einen Sensor erfolgen, welcher für die ausgewählte Maschine detektiert, dass ein sicherheitsrelevanter Maschinenvorgang gewünscht ist, z. B. weil die Maschine befüllt wurde oder weil eine bestimmte Zeitspanne verstrichen ist. Alternativ oder zusätzlich kann das Erstellen einer solchen Freigabeanforderung in Reaktion auf einen Freigabewunsch eines Benutzers erfolgen , welcher sich in der Industrieanlage aufhält.

Damit eine sicherheitsrelevanter Maschinenvorgang gestartet werden kann, ist es erforderlich, dass eine Freigabe erfolgt, indem nach einer Freigabeanforderung wenigstens ein Bediener wenigstens ein Quittierungssignal eingibt, welches in einem vorbestimmten Zusammenhang mit wenigstens einem bereitgestellten Signal steht.

Weil das wenigstens eine bereitgestellte Signal durch eine der ausgewählten Maschine zugeordnete Sicherheitsvorrichtung bereitgestellt wird, ist gewährleistet, dass der wenigstens eine Bediener nur für die ausgewählte Maschine den sicherheitsrelevanten Maschinenvorgang freigeben kann, auch wenn mehrere Maschinen vorhanden sein sollten, welche den sicherheitsrelevanten Maschinenvorgang ausführen könnten.

Die Zuordnung einer Sicherheitsvorrichtung zu einer Maschine kann so erfolgen, dass die Sicherheitsvorrichtung an der Maschine selbst angeordnet oder in dieser ausgebildet ist oder sie kann durch eine logische Zuordnung erfolgen.

Es kann vorgesehen sein, dass jede Freigabeanforderung nur an die der ausgewählten Maschine zugeordnete Sicherheitsvorrichtung übertragen wird, oder dass sie an mehrere - ggf. alle - vorhandenen Sicherheitsvorrichtungen übertragen wird und jede Sicherheitsvorrichtung prüft, ob sich eine Freigabeanforderung auf die ihr zugeordnete Maschine bezieht.

Der vorbestimmte Zusammenhang, welcher zwischen dem wenigstens einen bereitgestellten Signal und dem wenigstens einen Quittierungssignal für eine Freigabe vorliegen muss, kann dem wenigstens einen Bediener bekannt gegeben werden, beispielsweise durch ein Informationsschreiben oder eine Schulung.

Der wenigstens eine Bediener kann beispielsweise die Information erhalten, dass er zur Berücksichtigung des vorbestimmten Zusammenhangs einen durch das wenigstens eine bereitgestellte Signal angezeigte alphanumerischen Zeichenfolge in identischer Form als Quittierungssignal eingeben muss (z. B. bereitgestelltes Signal = "1234"; Quittierungssignal = "1234" oder bereitgestelltes Signal = "A1C234"; Quittierungssignal = "A1C234").

Alternativ könnte er die Information erhalten, dass er zur Berücksichtigung des vorbestimmten Zusammenhangs zu jedem alphanumerischen Zeichen den unmittelbaren Nachfolger eingeben muss (z. B. bereitgestelltes Signal = "A13B"; Quittierungssignal = "B24C" oder bereitgestelltes Signal = "1234"; Quittierungssignal = "2345").

Alternativ könnte er die Information erhalten, dass er zur Berücksichtigung des vorbestimmten Zusammenhangs angeben muss, welche geometrische Figur angezeigt wird (z. B. bereitgestelltes Signal = "○"; Quittierungssignal = "Kreis" oder bereitgestelltes Signal = "Δ"; Quittierungssignal = "Dreieck").

Andere vorbestimmte Zusammenhänge sind denkbar.

Es kann eine zeitliche Änderung vorgesehen sein, z. B. dass für einen vorbestimmten Zeitraum (z. B. fünf Sekunden) ein erstes Signal (z. B. "1234") bereitgestellt wird, auf welches mit einem ersten Quittierungssignal (z. B. "2346") zu antworten ist, dann für einen vorbestimmten Zeitraum (z. B. wieder fünf Sekunden) ein zweites Signal (z. B. "○") bereitgestellt wird, auf welches mit einem zweiten Quittierungssignal (z. B. "Kreis") zu antworten ist, usw.

Der Bediener, welcher sich entfernt von der Industrieanlage und der Maschine, für welche die Freigabeanforderung erstellt wurde, befindet, ist bevorzugt ein Mensch oder eine geeignete künstliche Intelligenz.

Die Eingabe des wenigstens einen Quittierungssignals kann beispielsweise durch eine Fernbedienung, eine Tastatur, einen Scanner, Sprache, eine Gestensteuerung, usw. erfolgen.

Vorteilhafte Ausführungsformen sind in den abhängigen Ansprüchen definiert.

Ein Kommunikationsnetzwerk kann beispielsweise das Internet oder ein lokales Netzwerk der Industrieanlage, bevorzugt Abfallsammeleinrichtung sein oder es kann über einen Kommunikationsabschnitt durch das Internet und über einen weiteren Kommunikationsabschnitt durch ein lokales Netzwerk der Industrieanlage, bevorzugt Abfallsammeleinrichtung gebildet werden.

Bevorzugt wird für jede Freigabeanforderung ein eindeutiges (d. h. sich nicht wiederholendes, also einmaliges) Signal bereitgestellt.

Die einzelnen beim Verfahren und bei der Industrieanlage, bevorzugt Abfallsammeleinrichtung, zum Einsatz kommenden Vorrichtungen wie Empfangsvorrichtung, Sendevorrichtung, Auswertevorrichtung, Freigabevorrichtung, usw. können durch einen oder mehrere Computer verwirklicht sein. Diese Vorrichtungen können physisch jeweils einzeln vorliegen oder es können mehrere - ggf. alle - Vorrichtungen physisch gemeinsam ausgebildet sein.

Bei einer Ausführungsform des Verfahrens ist wenigstens eine Kamera vorgesehen, deren Bildsignal an den wenigstens einen Bediener mittels einer Sendevorrichtung durch ein Kommunikationsnetzwerk übertragen wird, wobei bevorzugt vorgesehen ist, dass durch den Sichtbereich der wenigstens einen Kamera ein Sicherheitsbereich, in welchem sich die ausgewählte Maschine befindet, vollständig abgedeckt wird.

Dabei kann vorgesehen sein, dass das bereitgestellte Signal ein visuelles und/oder akustisches Signal, vorzugsweise in Form einer alphanumerischen Zeichenfolge oder eines maschinenlesbaren Codes, wie z. B. ein Strichcode oder QR-Code, ist und das Bereitstellen des visuellen und/oder akustischen Signals
- durch eine visuelle Anzeige des visuellen Signals mittels eines Monitors im Sichtbereich der wenigstens einen Kamera, oder
- in Form eines Overlays des Bildsignals der wenigstens einen Kamera mit dem visuellen Signal
erfolgt. Hierdurch wird der wenigstens eine Bediener dazu gezwungen, sich den Sichtbereich der Kamera tatsächlich anzusehen, da er ansonsten das bereitgestellte Signal nicht erkennen kann.

Eine alphanumerische Zeichenfolge kann aus einem oder mehreren alphanumerischen Zeichen, vorzugsweise aus wenigstens vier Zeichen, bestehen.

Ein maschinenlesbarer Code kann vom wenigstens einen Bediener mittels einer geeigneten Vorrichtung, wie z. B. einem Scanner oder einem mobilen Computer, eingelesen werden und das wenigstens eine Quittierungssignal kann nach dem vorbestimmten Zusammenhang automatisch erzeugt werden.

Bei einer Ausführungsform des Verfahrens ist vorgesehen, dass für den Fall, dass ein Freigeben der Freigabeanforderung erfolgt, der wenigstens eine sicherheitsrelevante Maschinenvorgang unmittelbar gestartet wird. Es kann aber auch vorgesehen sein, dass vom wenigstens einen Bediener zusätzliche Sicherheitsmaßnahmen zu bestätigen sind, wie beispielsweise, dass ein den Sicherheitsbereich versperrendes Tor geschlossen ist, dass ein Nothalt funktionsfähig ist, usw. In diesem Fall erfolgt der Start des Maschinenvorgangs erst dann, wenn sowohl wenigstens eine freigegebene Freigabeanforderung als auch die Bestätigungen aller zu bestätigenden Sicherheitsmaßnahmen vorliegen. Dabei kann bevorzugt vorgesehen sein, dass zuerst die Bestätigungen aller zu bestätigenden Sicherheitsmaßnahmen zu erfolgen hat, bevor überhaupt ein Signal bereitgestellt wird. Die Sicherheitsmaßnahmen können auch durch wenigstens eine Sicherheitsvorrichtung geprüft werden und müssen nicht zwingend von einem Bediener bestätigt werden, z. B. kann das Rolltor auch von der Sicherheitsvorrichtung geprüft werden.

Bei einer Ausführungsform des Verfahrens ist vorgesehen, dass der vorbestimmte Zusammenhang eine Identität des wenigstens einen bereitgestellten Signals und des wenigstens einen Quittierungssignals ist. Eine solche Identität kann beispielsweise in Form einer identischen alphanumerischen Zeichenfolge vorliegen.

Bei einer Ausführungsform des Verfahrens ist vorgesehen, dass der vorbestimmte Zusammenhang durch eine Datenbank bereitgestellt wird.

Bei einer Ausführungsform des Verfahrens ist vorgesehen, dass ein Freigeben der Freigabeanforderung nur dann erfolgt, wenn das wenigstens eine Quittierungssignal innerhalb eines vorbestimmten Zeitfensters eingegeben oder überprüft wurde. Beispielsweise kann ein Zeitfenster von einer Minute oder weniger vorgesehen sein. Wird das wenigstens eine Quittierungssignal außerhalb des vorbestimmten Zeitfensters empfangen, erfolgt keine Freigabe der Freigabeanforderung, auch wenn das wenigstens eine eingegebene Quittierungssignal mit dem wenigstens einen bereitgestellten Signal im vorbestimmten Zusammenhang steht. Andernfalls könnte so viel Zeit vergangen sein, dass inzwischen keine sichere Situation mehr vorliegt, weil z. B. inzwischen eine Person den Sicherheitsbereich der Maschine betreten hat. Anstelle dieser Maßnahme könnte man sich darauf verlassen, dass der wenigstens eine Bediener eigenverantwortlich noch einmal den Sicherheitsbereich überprüft, oder er könnte durch geeignete Maßnahmen dazu gezwungen werden.

Bei einer Ausführungsform des Verfahrens ist vorgesehen, dass das wenigstens eine bereitgestellte Signal in Reaktion auf eine an die erste oder wenigstens eine weitere Empfangsvorrichtung übermittelte Freigabeanforderung, bevorzugt in Echtzeit, generiert wird. Alternativ könnten eine Anzahl von Signalen in einem Datenspeicher bereitgehalten werden und bei Bedarf aus diesem bereitgestellt werden.

Bei einer Ausführungsform des Verfahrens ist vorgesehen, dass sich der wenigstens eine Bediener, welcher sich in einer von der Industrieanlage, bevorzugt Abfallsammeleinrichtung, entfernten Position befindet, in einer Leitstelle befindet, welche für die Industrieanlage, bevorzugt Abfallsammeleinrichtung, und ggf. für weitere Industrieanlagen, bevorzugt Abfallsammeleinrichtungen, vorgesehen ist, wobei Freigabeanforderungen auch in Bezug auf die weiteren Industrieanlagen, bevorzugt Abfallsammeleinrichtungen nach einem Verfahren der in dieser Offenbarung beschriebenen Art behandelt werden können.

Bei einer Ausführungsform des Verfahrens ist vorgesehen, dass das wenigstens eine bereitgestellte Signal in Form eines ersten und eines zweiten Signals bereitgestellt wird, wobei das erste Signal an einen ersten Bediener übermittelt wird und das zweite Signal an einen vom ersten Bediener verschiedenen, zweiten Bediener übermittelt wird. Es kann vorgesehen sein, dass eine Freigabe der Freigabeanforderung nur dann erfolgt, wenn sowohl vom ersten Bediener ein erstes Quittierungssignal eingegeben wird als auch vom zweiten Bediener ein zweites Quittierungssignal eingegeben wird, wobei sowohl das erste Quittierungssignal mit dem ersten Signal in einem vorbestimmten Zusammenhang steht als auch das zweite Quittierungssignal mit dem zweiten Signal in einem vorbestimmten Zusammenhang steht. Es kann sich dabei um denselben vorbestimmten Zusammenhang handeln oder um einen zweidimensionalen vorbestimmten Zusammenhang handeln oder es können zwei eindimensionale Zusammenhänge sein. Es kann alternativ vorgesehen sein, dass eine Freigabe der Freigabeanforderung auch dann erfolgt, wenn entweder vom ersten Bediener ein erstes Quittierungssignal eingegeben wird oder vom zweiten Bediener ein zweites Quittierungssignal eingegeben wird, welches in einem vorbestimmten Zusammenhang mit dem ersten oder zweiten Signal steht.

Sind mehr als zwei Bediener vorgesehen, welche jeweils ein Signal erhalten und jeweils ein Quittierungssignal eingeben müssen, kann z. B. vorgesehen sein, dass eine Freigabe erfolgt, wenn eine vorbestimmte Mindestanzahl von Bedienern (z. B. wenigstens zwei Bediener oder eine Mehrheit von Bedienern oder alle Bediener) ein korrektes Quittierungssignal (d. h. in einem vorbestimmten Zusammenhang mit dem jeweiligen erhaltenen Signal stehendes) eingegeben hat.

Bei einer Ausführungsform des Verfahrens ist vorgesehen, dass der wenigstens eine Bediener autorisiert sein muss, bevor dieser ein Quittierungssignal eingeben kann oder ein von diesem eingegebenes Quittierungssignal akzeptiert wird. Eine Autorisierung kann in einer beliebigen nach dem Stand der Technik bekannten Art erfolgen, z. B. durch Eingabe eines Kennworts oder biometrische Verifizierung.

Bei einer ersten bevorzugten Ausführungsform des Verfahrens sind wenigstens folgende Schritte vorgesehen:
- Erstellen einer Freigabeanforderung für wenigstens einen sicherheitsrelevanten Maschinenvorgangs in Bezug auf eine ausgewählte Maschine, z. B.
   - mittels einer ersten Fernbedienung durch wenigstens einen Bediener, welcher sich in einer von der Industrieanlage, bevorzugt Abfallsammeleinrichtung, entfernten Position befindet, oder
   - automatisch in Reaktion auf einen Freigabewunsch durch einen Benutzer oder Sensor, welcher sich in der Industrieanlage, bevorzugt Abfallsammeleinrichtung, befindet
- Übermitteln der Freigabeanforderung an wenigstens eine in der Industrieanlage, bevorzugt Abfallsammeleinrichtung, angeordnete oder mit dieser über eine Datenverbindung verbundene erste Empfangsvorrichtung durch ein Kommunikationsnetzwerk
- in Reaktion auf eine an die erste Empfangsvorrichtung übermittelte Freigabeanforderung Bereitstellen wenigstens eines, bevorzugt eindeutigen, visualisierbaren Signals (beispielsweise durch eine alphanumerische Zeichenkette mit wenigstens einem, bevorzugt mehreren alphanumerischen Zeichen, oder einem maschinenlesbaren Code wie z. B. ein Strichcode oder QR-Code) oder eines akustischen Signals durch eine in der Industrieanlage, bevorzugt Abfallsammeleinrichtung, angeordnete oder mit dieser über eine Datenverbindung verbundene und der ausgewählten Maschine zugeordnete Sicherheitsvorrichtung, wobei wenigstens eine Kamera ggf. mit Mikrofon vorgesehen ist, deren Bildsignal und ggf. Audiosignal an den wenigstens einen Bediener mittels einer Sendevorrichtung durch ein Kommunikationsnetzwerk übertragen wird, wobei bevorzugt vorgesehen ist, dass durch den Sichtbereich der wenigstens einen Kamera ein Sicherheitsbereich, in welchem sich die ausgewählte Maschine befindet, vollständig abgedeckt wird
- Bereitstellen des wenigstens einen visualisierbaren und ggf. akustischen Signals durch eine visuelle Anzeige des visualisierbaren und ggf. hörbaren Signals mittels eines Monitors bzw. Lautsprecher im Sichtbereich der wenigstens einen Kamera
- Übermitteln des bereitgestellten wenigstens einen Signals an den oder mit dieser über eine Datenverbindung verbundene Bediener mittels einer Sendevorrichtung durch ein Kommunikationsnetzwerk
- Erkennen des bereitgestellten wenigstens einen Signals durch den wenigstens einen Bediener und Eingeben wenigstens eines Quittierungssignals, welches mit dem wenigstens einen bereitgestellten Signal in einem vorbestimmten Zusammenhang steht, durch den Bediener in der entfernten Position mittels der ersten oder einer zweiten Fernbedienung
- Übertragen des wenigstens einen eingegebenen Quittierungssignals an eine Empfangsvorrichtung, welche die wenigstens eine erste Empfangsvorrichtung oder wenigstens eine weitere Empfangsvorrichtung ist, durch ein Kommunikationsnetzwerk
- Überprüfen, ob das wenigstens eine eingegebene Quittierungssignal mit dem wenigstens einen bereitgestellten Signal im vorbestimmten Zusammenhang steht durch eine Auswertevorrichtung und
   - für den Fall, dass das wenigstens eine eingegebene Quittierungssignal mit dem wenigstens einen bereitgestellten Signal im vorbestimmten Zusammenhang steht, Freigeben der Freigabeanforderung durch die Auswertevorrichtung oder eine Freigabevorrichtung
   - für den Fall, dass das wenigstens eine eingegebene Quittierungssignal mit dem wenigstens einen bereitgestellten Signal nicht im vorbestimmten Zusammenhang steht oder nicht empfangen wird, Ablehnen der Freigabeanforderung durch die Auswertevorrichtung oder eine Freigabevorrichtung
- unmittelbares oder zeitverzögertes Freigeben des sicherheitsrelevanten Maschinenvorgangs der ausgewählten Maschine oder Freigeben der des sicherheitsrelevanten Maschinenvorgangs erst dann, wenn vom wenigstens einen Bediener zusätzliche Sicherheitsmaßnahmen bestätigt worden sind

Bei einer zweiten bevorzugten Ausführungsform des Verfahrens sind wenigstens folgende Schritte vorgesehen:
- Erstellen einer Freigabeanforderung für einen sicherheitsrelevanten Maschinenvorgang in Bezug auf eine ausgewählte Maschine, z. B.
   - mittels einer ersten Fernbedienung durch wenigstens einen Bediener, welcher sich in einer von der Industrieanlage, bevorzugt Abfallsammeleinrichtung, entfernten Position befindet, oder
   - automatisch in Reaktion auf einen Startwunsch durch einen Benutzer oder Sensor, welcher sich in der Industrieanlage, bevorzugt Abfallsammeleinrichtung, befindet
- Übermitteln der Freigabeanforderung an eine in der Industrieanlage, bevorzugt Abfallsammeleinrichtung, angeordnete oder mit dieser über eine Datenverbindung verbundene wenigstens eine erste Empfangsvorrichtung durch ein Kommunikationsnetzwerk
- in Reaktion auf eine an die wenigstens eine erste Empfangsvorrichtung übermittelte Freigabeanforderung Bereitstellen wenigstens eines, bevorzugt eindeutigen, visualisierbaren Signals (beispielsweise durch eine alphanumerische Zeichenkette mit wenigstens einem, bevorzugt mehreren alphanumerischen Zeichen, oder einem maschinenlesbaren Code wie z. B. ein Strichcode oder QR-Code) durch eine der ausgewählten Maschine zugeordnete Sicherheitsvorrichtung, wobei wenigstens eine Kamera vorgesehen ist, deren Bildsignal an den wenigstens einen Bediener mittels einer Sendevorrichtung durch ein Kommunikationsnetzwerk übertragen wird, wobei bevorzugt vorgesehen ist, dass durch den Sichtbereich der wenigstens einen Kamera ein Sicherheitsbereich, in welchem sich die ausgewählte Maschine befindet, vollständig abgedeckt wird
- Bereitstellen des visuellen Signals in Form eines Overlays des Bildsignals der wenigstens einen Kamera mit dem visuellen Signal
- Übermitteln des wenigstens einen bereitgestellten Signals an den Bediener mittels einer Sendevorrichtung durch ein Kommunikationsnetzwerk
- Erkennen des bereitgestellten Signals durch den wenigstens einen Bediener und Eingeben eines Quittierungssignals, welches mit dem bereitgestellten Signal in einem vorbestimmten Zusammenhang steht, durch den wenigstens einen Bediener in der entfernten Position mittels der ersten oder wenigstens einer weiteren Fernbedienung
- Übertragen des wenigstens einen eingegebenen Quittierungssignals an eine Empfangsvorrichtung, welche die wenigstens eine erste Empfangsvorrichtung oder wenigstens eine weitere Empfangsvorrichtung ist, durch ein Kommunikationsnetzwerk
- Überprüfen, ob das wenigstens eine eingegebene Quittierungssignal mit dem wenigstens einen bereitgestellten Signal im vorbestimmten Zusammenhang steht durch eine Auswertevorrichtung und
   - für den Fall, dass das wenigstens eine eingegebene Quittierungssignal mit dem wenigstens einen bereitgestellten Signal im vorbestimmten Zusammenhang steht, Freigeben der Freigabeanforderung durch die Auswertevorrichtung oder eine Freigabevorrichtung
   - für den Fall, dass das wenigstens eine eingegebene Quittierungssignal mit dem wenigstens einen bereitgestellten Signal nicht im vorbestimmten Zusammenhang steht oder nicht empfangen wird, Ablehnen der Freigabeanforderung durch die Auswertevorrichtung oder eine Freigabevorrichtung
- unmittelbares oder zeitverzögertes Freigeben des sicherheitsrelevanten Maschinenvorgangs der ausgewählten Maschine oder Freigeben der des sicherheitsrelevanten Maschinenvorgangs erst dann, wenn vom wenigstens einen Bediener zusätzliche Sicherheitsmaßnahmen bestätigt worden sind

Bei einer Ausführungsform der Industrieanlage, bevorzugt Abfallsammeleinrichtung, ist vorgesehen, dass die Auswertevorrichtung und die Freigabevorrichtung durch dieselbe Vorrichtung gebildet werden.

Es kann vorgesehen sein, dass in der Industrieanlage, bevorzugt Abfallsammeleinrichtung, ein Verfahren nach wenigstens einer der vorbeschriebenen Ausführungsformen zur Anwendung kommt, wobei die Industrieanlage, bevorzugt Abfallsammeleinrichtung, bevorzugt zur Durchführung des ersten oder zweiten Ausführungsbeispiels des Verfahrens konfiguriert ist.

Es kann vorgesehen sein, dass die Industrieanlage, bevorzugt Abfallsammeleinrichtung, wenigstens eine Kamera aufweist, deren Bildsignal an den wenigstens einen Bediener mittels einer Sendevorrichtung durch ein Kommunikationsnetzwerk übertragen wird, wobei bevorzugt vorgesehen ist, dass durch den Sichtbereich der wenigstens einen Kamera ein Sicherheitsbereich, in welchem sich die ausgewählte Maschine befindet, vollständig abgedeckt wird.

Dabei kann vorgesehen sein, dass das bereitgestellte Signal ein visuelles oder akustisches Signal, vorzugsweise in Form einer alphanumerischen Zeichenfolge oder eines maschinenlesbaren Codes, ist und
- das Bereitstellen des visuellen und ggf. akustischen Signals durch eine visuelle Anzeige des visuellen Signals mittels eines Monitors im Sichtbereich der wenigstens einen Kamera und ggf. einen Lautsprecher, oder
- das Bereitstellen des visuellen Signals in Form eines Overlays des Bildsignals der wenigstens einen Kamera mit dem visuellen Signal
erfolgt. Hierdurch wird der wenigstens eine Bediener dazu gezwungen, sich den Sichtbereich der Kamera tatsächlich anzusehen, da er ansonsten das wenigstens eine bereitgestellte Signal nicht erkennen kann.

Eine alphanumerische Zeichenfolge kann aus einem oder mehreren alphanumerischen Zeichen, vorzugsweise aus wenigstens vier Zeichen bestehen.

Ein maschinenlesbarer Code kann vom wenigstens einen Bediener mittels einer geeigneten Vorrichtung wie z. B. einem Scanner oder einem mobilen Computer eingelesen werden und das wenigstens eine Quittierungssignal kann automatisch mit dem vorbestimmten Zusammenhang erzeugt werden.

Die Industrieanlage, bevorzugt Abfallsammeleinrichtung, kann dazu konfiguriert sein, für den Fall, dass ein Freigeben der Freigabeanforderung erfolgt, den sicherheitsrelevanten Maschinenvorgang unmittelbar freizugeben. Es kann aber auch vorgesehen sein, dass vom wenigstens einen Bediener zusätzliche Sicherheitsmaßnahmen zu bestätigen sind, wie beispielsweise, dass ein den Sicherheitsbereich versperrendes Tor geschlossen ist, dass ein Nothalt funktionsfähig ist, usw. In diesem Fall erfolgt eine Freigabe des sicherheitsrelevanten Maschinenvorgangs erst dann, wenn sowohl eine freigegebene Freigabeanforderungen als auch die Bestätigungen aller zu bestätigenden Sicherheitsmaßnahmen vorliegen. Dabei kann bevorzugt vorgesehen sein, dass zuerst die Bestätigungen aller zu bestätigenden Sicherheitsmaßnahmen zu erfolgen hat, bevor überhaupt ein Signal bereitgestellt wird. Die Sicherheitsmaßnahmen können auch durch wenigstens eine Sicherheitsvorrichtung geprüft werden und müssen nicht zwingend von einem Bediener bestätigt werden, z. B. kann das Rolltor auch von der Sicherheitsvorrichtung geprüft werden.

Es kann vorgesehen sein, dass die Industrieanlage, bevorzugt Abfallsammeleinrichtung, dazu konfiguriert ist, dass der vorbestimmte Zusammenhang eine Identität des bereitgestellten Signals und des Quittierungssignals ist. Eine solche Identität kann beispielsweise in Form einer identischen alphanumerischen Zeichenfolge vorliegen.

Es kann vorgesehen sein, dass die Industrieanlage, bevorzugt Abfallsammeleinrichtung, dazu konfiguriert ist, dass der vorbestimmte Zusammenhang durch eine Datenbank bereitgestellt wird.

Es kann vorgesehen sein, dass die Industrieanlage, bevorzugt Abfallsammeleinrichtung, dazu konfiguriert ist, dass ein Freigeben der Freigabeanforderung nur dann erfolgt, wenn das wenigstens eine Quittierungssignal innerhalb eines vorbestimmten Zeitfensters eingegeben wurde. Beispielsweise kann ein Zeitfenster von einer Minute vorgesehen sein. Wird das wenigstens eine Quittierungssignal außerhalb des vorbestimmten Zeitfensters empfangen, erfolgt keine Freigabe der Freigabeanforderung, auch wenn das wenigstens eine eingegebene Quittierungssignal mit dem wenigstens einen bereitgestellten Signal im vorbestimmten Zusammenhang steht. Andernfalls könnte so viel Zeit vergangen sein, dass inzwischen keine sichere Situation mehr vorliegt, weil z. B. inzwischen eine Person den Sicherheitsbereich der Maschine betreten hat. Anstelle dieser Maßnahme könnte man sich darauf verlassen, dass der wenigstens eine Bediener eigenverantwortlich noch einmal den Sicherheitsbereich überprüft, oder er könnte durch geeignete Maßnahmen dazu gezwungen werden.

Es kann vorgesehen sein, dass die Industrieanlage, bevorzugt Abfallsammeleinrichtung, dazu konfiguriert ist, dass das bereitgestellte Signal in Reaktion auf eine an die erste oder wenigstens eine weitere Empfangsvorrichtung übermittelte Freigabeanforderung, bevorzugt in Echtzeit, generiert wird. Alternativ könnten eine Anzahl von Signalen in einem Datenspeicher bereitgehalten werden und bei Bedarf aus diesem bereitgestellt werden.

In Bezug auf die Fernbedienung kann vorgesehen sein, dass diese in einer Leitstelle angeordnet ist, welche für die Industrieanlage, bevorzugt Abfallsammeleinrichtung, und ggf. für weitere Industrieanlagen, bevorzugt Abfallsammeleinrichtungen, vorgesehen ist.

Es kann vorgesehen sein, dass eine Dokumentation (z. B. in Bezug auf ein Kamerabild einer ausgewählten Maschine und/oder eine erfolgte Bestätigung aller zu bestätigenden Sicherheitsmaßnahmen und/oder der verwendeten alphanumerischen Zeichenfolge und/oder eines Namens eines Bedieners und/oder eines Namens eines Benutzers, usw.) erfolgt.

Ausführungsformen des Verfahrens und der Industrieanlage werden anhand der Figuren diskutiert.

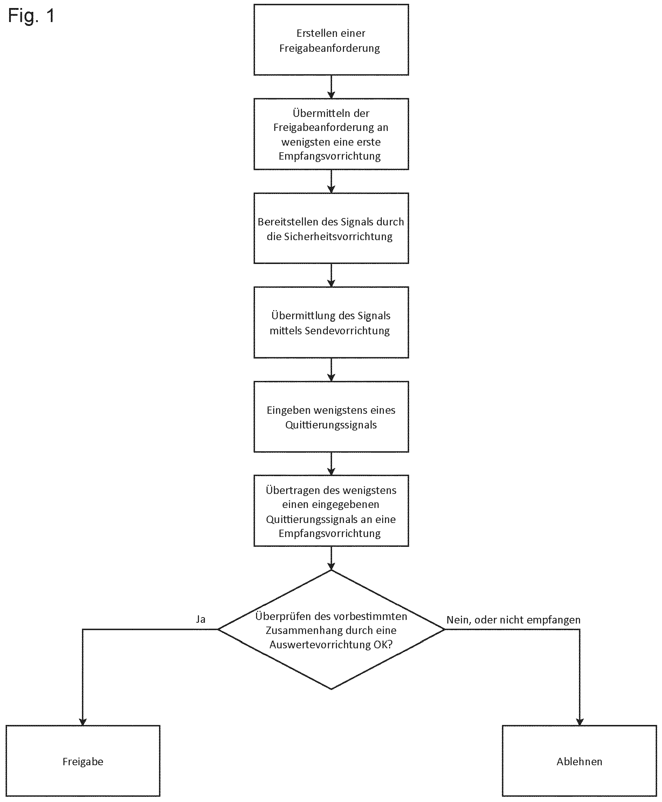

Figur 1 zeigt schematisch ein Ausführungsbeispiel eines Verfahrens zum Freigeben oder Ablehnen wenigstens eines sicherheitsrelevanten Maschinenvorgangs in einer Industrieanlage in Form einer Abfallsammeleinrichtung durch wenigstens einen sich in einer von der Abfallsammeleinrichtung entfernten Position befindenden Bediener, wobei die Abfallsammeleinrichtung wenigstens eine Maschine aufweist, durch welche der wenigstens eine sicherheitsrelevante Maschinenvorgang ausführbar ist.

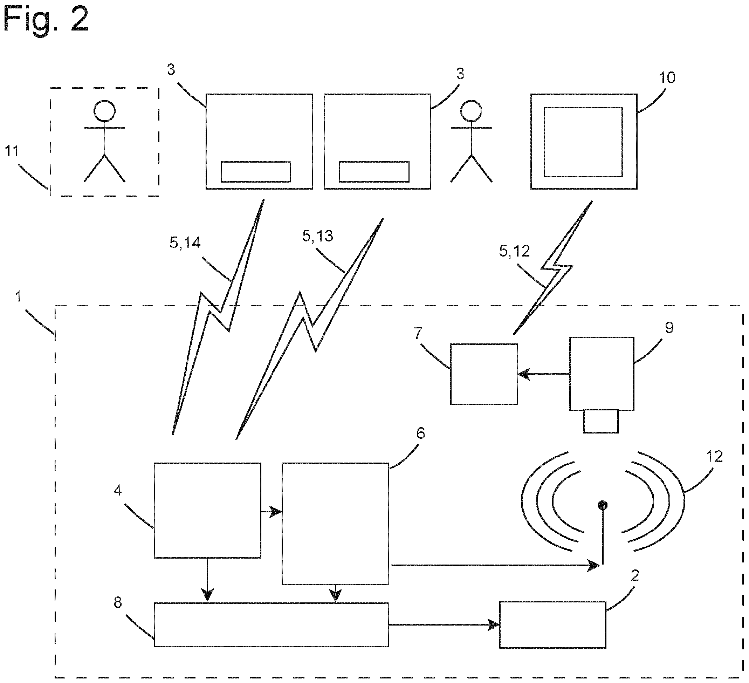

Figur 2 zeigt schematisch ein Ausführungsbeispiel einer Industrieanlage in Form einer Abfallsammeleinrichtung mit wenigstens einer Maschine aufweist, durch welche wenigstens ein sicherheitsrelevanter Maschinenvorgang ausführbar ist.

In Figur 1 ist ein Verfahren zum Freigeben oder Ablehnen wenigstens eines sicherheitsrelevanten Maschinenvorgangs in einer Industrieanlage, insbesondere einer Abfallsammeleinrichtung 1, durch wenigstens einen sich in einer von der Industrieanlage entfernten Position (z. B. in einer Leitstelle 11) befindenden Bediener gezeigt, wobei die Industrieanlage wenigstens eine Maschine 2 aufweist, durch welche der wenigstens eine sicherheitsrelevante Maschinenvorgang ausführbar ist, mit wenigstens den folgenden Schritten:
- Erstellen einer Freigabeanforderung 14 für einen sicherheitsrelevanten Maschinenvorgang in Bezug auf eine ausgewählte Maschine 2, dies kann beispielsweise automatisch durch einen Sensor erfolgen, welcher für die ausgewählte Maschine 2 detektiert, dass ein sicherheitsrelevanter Maschinenvorgang gewünscht ist, z. B. weil die Maschine befüllt wurde, oder durch einen Benutzer, welcher sich in der Industrieanlage aufhält
- Übermitteln der Freigabeanforderung 14 an wenigstens eine erste Empfangsvorrichtung 4 durch ein Kommunikationsnetzwerk 5
- in Reaktion auf eine an die wenigstens eine erste Empfangsvorrichtung 4 übermittelte Freigabeanforderung 14 Bereitstellen wenigstens eines, bevorzugt eindeutigen, Signals 12 durch eine der ausgewählten Maschine 2 zugeordnete Sicherheitsvorrichtung 6
- Übermitteln des bereitgestellten wenigstens einen Signals 12 an den wenigstens einen Bediener mittels einer Sendevorrichtung 7 durch ein Kommunikationsnetzwerk 5
- Eingeben wenigstens eines Quittierungssignals 13, welches mit dem wenigstens einen bereitgestellten Signal 12 in einem vorbestimmten Zusammenhang steht, durch den wenigstens einen Bediener in der entfernten Position
- Übertragen des wenigstens einen eingegebenen Quittierungssignals 13 an eine Empfangsvorrichtung 4, welche die wenigstens eine erste Empfangsvorrichtung 4 oder wenigstens eine weitere Empfangsvorrichtung 4 ist, durch ein Kommunikationsnetzwerk 5
- Überprüfen durch eine Auswertevorrichtung 8, ob das wenigstens eine eingegebene Quittierungssignal 13 mit dem wenigstens einen bereitgestellten Signal 12 im vorbestimmten Zusammenhang steht, und
   - für den Fall, dass das wenigstens eine eingegebene Quittierungssignal 13 mit dem wenigstens einen bereitgestellten Signal 12 im vorbestimmten Zusammenhang steht, Freigeben der Freigabeanforderung 14 durch die Auswertevorrichtung 8 oder eine Freigabevorrichtung
   - für den Fall, dass das wenigstens eine eingegebene Quittierungssignal 13 mit dem wenigstens einen bereitgestellten Signal 12 nicht im vorbestimmten Zusammenhang steht oder nicht empfangen wird, Ablehnen der Freigabeanforderung 14 durch die Auswertevorrichtung 8 oder eine Freigabevorrichtung

Figur 2 zeigt eine Industrieanlage, insbesondere Abfallsammeleinrichtung 1, aufweisend wenigstens:
- eine Maschine 2 vorzugsweise Pressvorrichtung, bei welcher wenigstens ein sicherheitsrelevanter Maschinenvorgang möglich ist
- wenigstens eine erste Empfangsvorrichtung 4, die dazu konfiguriert ist, über ein Kommunikationsnetzwerk 5 eine Freigabeanforderung 14 zu empfangen
- eine Sicherheitsvorrichtung 6, die dazu konfiguriert ist, in Reaktion auf eine an die erste Empfangsvorrichtung 4 übermittelte Freigabeanforderung 14 wenigstens ein, bevorzugt eindeutiges, Signal bereitzustellen
- eine Sendevorrichtung 7, die dazu konfiguriert ist, das wenigstens eine bereitgestellte Signal 12 durch eine Kamera 9 und ein Kommunikationsnetzwerk 5 an wenigstens einen sich entfernt von der Industrieanlage befindenden Bediener (hier z. B. mittels eines Monitors 10) zu übermitteln, der Bediener kann sich z. B. in einer Leitstelle 11 befinden
- eine Empfangsvorrichtung 4, die dazu konfiguriert ist, über ein Kommunikationsnetzwerk 5 wenigstens ein Quittierungssignal 13 des wenigstens einen Bedieners zu empfangen, wobei die Empfangsvorrichtung 4 die wenigstens eine erste Empfangsvorrichtung 4 oder wenigstens eine weitere Empfangsvorrichtung 4 ist, hierfür kann der Bediener eine Fernbedienung 3 verwenden
- eine Auswertevorrichtung 8, die dazu konfiguriert ist zu überprüfen, ob ein empfangenes Quittierungssignal 13 mit dem bereitgestellten Signal 12 in einem vorbestimmten Zusammenhang steht
- eine Freigabevorrichtung, die dazu konfiguriert ist,
   - für den Fall, dass das eingegebene Quittierungssignal 13 mit dem bereitgestellten Signal 12 im vorbestimmten Zusammenhang steht, die Freigabeanforderung 14 freizugeben
   - für den Fall, dass das eingegebene Quittierungssignal 13 mit dem bereitgestellten Signal 12 nicht im vorbestimmten Zusammenhang steht oder nicht empfangen wird, die Freigabeanforderung 14 abzulehnen

### Bezugszeichen:

- 1: Abfallsammeleinrichtung
- 2: Maschine
- 3: Fernbedienung
- 4: Empfangsvorrichtung
- 5: Kommunikationsnetzwerk
- 6: Sicherheitsvorrichtung
- 7: Sendevorrichtung
- 8: Auswertevorrichtung
- 9: Kamera
- 10: Monitor
- 11: Leitstelle
- 12: bereitgestelltes Signal
- 13: Quittierungssignal
- 14: Freigabeanforderung

## Patentansprüche

1. Verfahren zum Freigeben oder Ablehnen wenigstens eines sicherheitsrelevanten Maschinenvorgangs in einer Industrieanlage, insbesondere einer Abfallsammeleinrichtung (1), durch wenigstens einen sich in einer von der Industrieanlage entfernten Position befindenden Bediener, wobei die Industrieanlage wenigstens eine Maschine (2), bevorzugt mehrere Maschinen (2), aufweist, durch welche der wenigstens eine sicherheitsrelevante Maschinenvorgang ausführbar ist, mit wenigstens den folgenden Schritten:
- Erstellen einer Freigabeanforderung (14) für einen sicherheitsrelevanten Maschinenvorgang in Bezug auf eine ausgewählte Maschine (2)
- Übermitteln der Freigabeanforderung an wenigstens eine erste Empfangsvorrichtung (4) durch ein Kommunikationsnetzwerk (5)
- in Reaktion auf eine an die wenigstens eine erste Empfangsvorrichtung (4) übermittelte Freigabeanforderung (14) Bereitstellen wenigstens eines, bevorzugt eindeutigen, Signals (12) durch eine der ausgewählten Maschine (2) zugeordnete Sicherheitsvorrichtung (6)
- Übermitteln des bereitgestellten wenigstens einen Signals (12) an den wenigstens einen Bediener mittels einer Sendevorrichtung (7) durch ein Kommunikationsnetzwerk (5)
- Eingeben wenigstens eines Quittierungssignals (13), welches mit dem wenigstens einen bereitgestellten Signal (12) in einem vorbestimmten Zusammenhang steht, durch den wenigstens einen Bediener in der entfernten Position
- Übertragen des wenigstens einen eingegebenen Quittierungssignals (13) an eine Empfangsvorrichtung (4), welche die wenigstens eine erste Empfangsvorrichtung (4) oder wenigstens eine weitere Empfangsvorrichtung (4) ist, durch ein Kommunikationsnetzwerk (5)
- Überprüfen durch eine Auswertevorrichtung (8), ob das wenigstens eine eingegebene Quittierungssignal (13) mit dem wenigstens einen bereitgestellten Signal (12) im vorbestimmten Zusammenhang steht, und
• für den Fall, dass das wenigstens eine eingegebene Quittierungssignal (13) mit dem wenigstens einen bereitgestellten Signal (12) im vorbestimmten Zusammenhang steht, Freigeben der Freigabeanforderung (14) durch die Auswertevorrichtung (8) oder eine Freigabevorrichtung
• für den Fall, dass das wenigstens eine eingegebene Quittierungssignal (13) mit dem wenigstens einen bereitgestellten Signal (12) nicht im vorbestimmten Zusammenhang steht oder nicht empfangen wird, Ablehnen der Freigabeanforderung (14) durch die Auswertevorrichtung (8) oder eine Freigabevorrichtung.

2. Verfahren nach dem vorangehenden Anspruch, wobei wenigstens eine Kamera (9) vorgesehen ist, deren Bildsignal an den wenigstens einen Bediener mittels einer Sendevorrichtung (7) durch ein Kommunikationsnetzwerk (5) übertragen wird, wobei bevorzugt vorgesehen ist, dass durch den Sichtbereich der wenigstens einen Kamera (9) ein Sicherheitsbereich, in welchem sich die ausgewählte Maschine (2) befindet, vollständig abgedeckt wird.

3. Verfahren nach dem vorangehenden Anspruch, wobei das wenigstens eine bereitgestellte Signal (12) ein visuelles und/oder akustisches Signal, vorzugsweise in Form eines alphanumerischen Codes oder eines maschinenlesbaren Codes, ist und das Bereitstellen des visuellen und/oder akustischen Signals
- durch eine visuelle Anzeige des visuellen Signals mittels eines Monitors im Sichtbereich der wenigstens einen Kamera (9), oder
- in Form eines Overlays des Bildsignals der wenigstens einen Kamera (9) mit dem visuellen Signal
erfolgt.

4. Verfahren nach wenigstens einem der vorangehenden Ansprüche, wobei für den Fall, dass ein Freigeben der Freigabeanforderung (14) erfolgt, der sicherheitsrelevante Maschinenvorgang unmittelbar gestartet wird.

5. Verfahren nach wenigstens einem der vorangehenden Ansprüche, wobei der vorbestimmte Zusammenhang eine Identität des wenigstens einen bereitgestellten Signals (12) und des wenigstens einen Quittierungssignals (13) beinhaltet oder durch eine Datenbank bereitgestellt wird.

6. Verfahren nach wenigstens einem der vorangehenden Ansprüche, wobei ein Freigeben der Freigabeanforderung (14) nur dann erfolgt, wenn das wenigstens eine Quittierungssignal (13) innerhalb eines vorbestimmten Zeitfensters eingegeben oder überprüft wurde.

7. Verfahren nach wenigstens einem der vorangehenden Ansprüche, wobei das wenigstens eine bereitgestellte Signal (12) in Reaktion auf eine an die erste oder die wenigstens eine weitere Empfangsvorrichtung (4) übermittelte Freigabeanforderung (14), bevorzugt in Echtzeit, generiert wird.

8. Verfahren nach wenigstens einem der vorangehenden Ansprüche, wobei die Freigabeanforderung (14) durch den wenigstens einen Bediener in Reaktion auf einen Freigabewunsch oder Startwunsch durch einen Benutzer oder einen Sensor erfolgt, welcher sich in der Industrieanlage, bevorzugt Abfallsammeleinrichtung (1), befindet.

9. Verfahren nach wenigstens einem der vorangehenden Ansprüche, wobei sich der wenigstens eine Bediener, welcher sich in einer von der Industrieanlage entfernten Position befindet, bevorzugt in einer Leitstelle (11) befindet, welche für die Industrieanlage und ggf. für weitere Industrieanlagen vorgesehen ist.

10. Industrieanlage, insbesondere Abfallsammeleinrichtung (1), aufweisend wenigstens:
- eine Maschine (2), bevorzugt mehrere Maschinen (2), vorzugsweise Pressvorrichtung(en), bei welcher wenigstens ein sicherheitsrelevanter Maschinenvorgang möglich ist
wenigstens eine erste Empfangsvorrichtung (4), die dazu konfiguriert ist, über ein Kommunikationsnetzwerk (5) eine Freigabeanforderung (14) zu empfangen
- eine Sicherheitsvorrichtung (6), die dazu konfiguriert ist, in Reaktion auf eine an die erste Empfangsvorrichtung (4) übermittelte Freigabeanforderung (14) wenigstens ein, bevorzugt eindeutiges, Signal (12) bereitzustellen
- eine Sendevorrichtung (7), die dazu konfiguriert ist, das wenigstens eine bereitgestellte Signal (12) durch ein Kommunikationsnetzwerk (5) an wenigstens einen sich entfernt von der Industrieanlage befindenden Bediener zu übermitteln
- eine Empfangsvorrichtung (4), die dazu konfiguriert ist, über ein Kommunikationsnetzwerk (5) wenigstens ein Quittierungssignal (13) des wenigstens einen Bedieners zu empfangen, wobei die Empfangsvorrichtung (4) die wenigstens eine erste Empfangsvorrichtung (4) oder wenigstens eine weitere Empfangsvorrichtung (4) ist
- eine Auswertevorrichtung (8), die dazu konfiguriert ist zu überprüfen, ob das wenigstens eine empfangenes Quittierungssignal (13) mit dem bereitgestellten Signal (12) in einem vorbestimmten Zusammenhang steht
- eine Freigabevorrichtung, die dazu konfiguriert ist,
• für den Fall, dass das wenigstens eine eingegebene Quittierungssignal (13) mit dem bereitgestellten Signal (12) im vorbestimmten Zusammenhang steht, die Freigabeanforderung (14) freizugeben
• für den Fall, dass das wenigstens eine eingegebene Quittierungssignal (13) mit dem bereitgestellten Signal (12) nicht im vorbestimmten Zusammenhang steht oder nicht empfangen wird, die Freigabeanforderung (14) abzulehnen.

11. Industrieanlage nach dem vorangehenden Anspruch, wobei die Auswertevorrichtung (8) und die Freigabevorrichtung durch dieselbe Vorrichtung gebildet werden.

12. Industrieanlage nach einem der beiden vorangehenden Ansprüche, wobei in der Industrieanlage ein Verfahren nach wenigstens einem der Ansprüche 1 bis 9 zur Anwendung kommt.

13. Fernbedienung (3), die dazu konfiguriert ist, in einem Verfahren nach wenigstens einem der Ansprüche 1 bis 9 verwendet zu werden und eine Eingabe eines Quittierungssignals (13) durch wenigstens Bediener zu akzeptieren und das eingegebene Quittierungssignal (13) an eine erste oder wenigstens eine weitere Empfangsvorrichtung (4) durch ein Kommunikationsnetzwerk (5) zu übermitteln.

14. Computerprogramm, welches bei Ausführung auf einem mobilen Computer, insbesondere Laptop, Mobiltelefon oder Tablet, den mobilen Computer als eine Fernbedienung (3) nach dem vorangehenden Anspruch konfiguriert.

15. Datensignal, welches ein Computerprogramm nach dem vorangehenden Anspruch überträgt.
